# EUROPEAN PATENT APPLICATION

(11) **EP 4 628 553 A1**
(43) Date of publication of application: **08.10.2025**
(21) Application number: 23897759.9
(22) Date of filing: 28.11.2023
(51) Int. Cl.: C09D 11/16, B43K 7/00, C09D 11/18

(54) **OIL-IN-WATER INK COMPOSITION FOR WRITING UTENSILS**

(30) Priority: 28.11.2022 JP 2022189121; 28.11.2022 JP 2022189125
(71) Applicant: MITSUBISHI PENCIL COMPANY, LIMITED, Tokyo 140-8537 (JP)
(72) Inventor: OGURA, Kosuke, Tokyo 140-8537 (JP)
(74) Representative: Vossius & Partner Patentanwälte Rechtsanwälte mbB
(86) International application number: PCT/JP2023/042486
(87) International publication number: WO 2024/117111

(57) **Abstract**

An aqueous ink composition for writing utensils according to the present invention comprises an aqueous phase and an oil phase that is dispersed, in the form of an oil-in-water emulsion, in the aqueous phase; at least one of the oil phase and the aqueous phase contains a coloring material; the oil phase contains an oxygen removing agent; the content ratio of the oxygen removing agent is 3% by mass or more relative to the mass of the oil phase; and the content ratio of the oxygen removing agent in the aqueous phase is 1.5% by mass or less relative to the mass of the aqueous phase.

## Description

### FIELD

The present invention relates to a water-based ink composition for a writing instrument.

### BACKGROUND

Examples of characteristics of water-based ballpoint pens include a light writing feeling, whereas a scratch feeling may be often generated. Water-soluble dyes to be used as colorants, while having the advantage of being high in coloring power and freedom of toning, are low in weather resistance, and have the problem wherein drawn lines easily bleed in the case of impingement of water in such drawn lines.

Oil-based ballpoint pens, while having the advantages of no scratch feeling during writing and less bleeding of drawn lines, may often have heavy writing performance. Oil-soluble dyes to be used as colorants have water resistance, and do not entail the above-mentioned bleeding in the case of impingement of water in drawn lines.

In recent years, oil-based ballpoint pens enhanced in writing performance by reduction in viscosity of oil-based inks have also been developed. However, oil-based inks low in viscosity are larger in the amount of flow-out during writing, and thus impair the drying performance of drawn lines, cause strike-through of inks toward a rear surface of paper, and dripping.

As solutions capable of facilitating both favorable writing performance of aqueous phases and water resistance of oil-soluble dyes to be satisfied so as to address the above problems, ink compositions for water-based ballpoint pens have been disclosed in which inks are in the state of oil-in-water drop-type emulsions (O/W emulsions).

PTL 1 discloses an ink composition for a water-based ballpoint pen, an oil phase being included in the state of being an oil-in-water drop-type emulsion in an aqueous phase, in which at least one of the oil phase or the aqueous phase includes a colorant, and the oil phase includes, in a component constituting the oil phase, an estolide being a fatty acid oligomer obtained by condensation of fatty acids each having a hydroxyl group or condensation of a fatty acid having a hydroxyl group and a fatty acid having no hydroxyl group, or an ester of the estolide and an alcohol.

PTL 2 discloses an ink composition for a water-based ballpoint pen, an oil phase being included in the state of being an oil-in-water drop-type emulsion in an aqueous phase, in which the oil phase or the oil phase and the aqueous phase include(s) a colorant, and the oil phase includes, in a component constituting the oil phase, a fatty acid having 6 to 22 carbon atoms.

It is generally known that oxygen removers are contained in inks for writing instruments in order to suppress oxidation degradation of ink components. Such oxygen removers are added to ink compositions, whereby a favorable oxygen absorption ability is exerted, and the problem of growth of oxygen-containing gases in inks and thus the generation of bubbles of the gases in the inks can be suppressed.

### [CITATION LIST]

### [PATENT LITERATURE]

[PTL 1] Japanese Unexamined Patent Publication (Kokai) No. 2013-221051
[PTL 2] Japanese Unexamined Patent Publication (Kokai) No. 2013-203790

### SUMMARY

### [TECHNICAL PROBLEM]

### <<Object of First Present Invention>>

The inventors of the present invention have found that, if an oxygen remover is contained at a high concentration in a water-based ink for a writing instrument, temporal stability of the ink may be degraded due to crystallization or the like of the oxygen remover in the ink, and the preservative performance of the ink may be impaired.

The present invention provides a novel ink composition for a water-based ballpoint pen, in which not only is oxidation degradation of an ink suppressed, but also suppressed in terms of bubble generation due to an impact, and which further has favorable temporal stability and preservative performance.

### <<Object of Second Present Invention>>

The oil-in-water drop-type inks of PTLS 1 and 2, although having both the advantages of a water-based ink and an oil-based ink, sometimes easily cause blurring in writing after storage under a low-temperature environment for a long period.

The present invention then provides a water-based ink composition for a writing instrument, in which favorable writing performance can be maintained even after storage under a low-temperature environment for a long period.

### [SOLUTION TO PROBLEM]

### <<First Present Invention>>

As a result of extensive studies, the present inventors have found that the above problems can be solved by the following solution and thus have therefor completed the first present invention. More specifically, the first present invention is as described below:
<Aspect A1> A water-based ink composition for a writing instrument, the ink composition having an aqueous phase, and an oil phase dispersed in the state of an oil-in-water drop-type emulsion in the aqueous phase, wherein
   at least one of the oil phase and the aqueous phase comprises a colorant,
   the oil phase contains an oxygen remover and
   a content of the oxygen remover is 3% by mass or more based on a mass of the oil phase, and
   a content of the oxygen remover in the aqueous phase is 1.5% by mass or less based on a mass of the aqueous phase.
<Aspect A2> The water-based ink composition for a writing instrument according to Aspect A1, wherein the oxygen remover in the oil phase is a water-insoluble oxygen remover.
<Aspect A3> The water-based ink composition for a writing instrument according to Aspect A2, wherein the water-insoluble oxygen remover is at least one selected from the group consisting of tocopherol, terpene aldehyde, and any derivative thereof.
<Aspect A4> A writing instrument comprising an ink storage portion in which the water-based ink composition for a writing instrument according to any one of Aspects A1 to A3 is packed.
<Aspect A5> The writing instrument according to Aspect A4, wherein the writing instrument is a ballpoint pen.

### <<Second Present Invention>>

The present inventors have made intensive studies, as a result of which they have found that the above problems can be solved by the following solution and thus have completed the second present invention. Specifically, the second present invention is as described below:
<Aspect B1> A water-based ink composition for a writing instrument, the ink composition having an aqueous phase, and an oil phase dispersed in the state of an oil-in-water drop-type emulsion in the aqueous phase, wherein
   at least one of the oil phase and the aqueous phase comprises a colorant, and
   the oil phase contains a primary alcohol or fatty acid having the following general formula (a) or (b) and having branched chains and 8 or more carbon atoms: 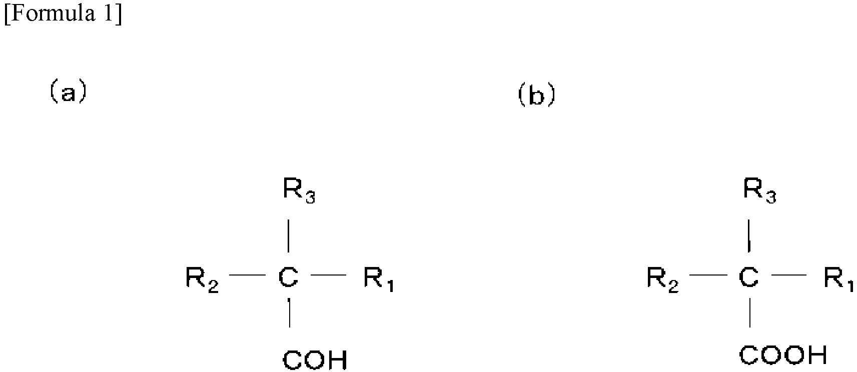
   wherein R₁ and R₂ are each a linear or branched alkyl group, R₃ is hydrogen or a linear or branched alkyl group, and the number of carbon atoms in R₁, R₂ and R₃ in total is 6 or more.
<Aspect B2> The water-based ink composition for a writing instrument according to Aspect B1, wherein the number of carbon atoms in the alcohol or fatty acid in the oil phase is 22 or less.
<Aspect B3> The water-based ink composition for a writing instrument according to Aspect B1 or B2, wherein at least two of the branched chains of the alcohol or fatty acid in the oil phase are each an alkyl group having 4 or more carbon atoms.
<Aspect B4> The water-based ink composition for a writing instrument according to any one of Aspects B1 to B3, wherein a viscosity of the oil phase, measured under conditions of a temperature of 25°C and a shear rate of 38 s⁻¹, is 100 to 5000 mPa·s.
<Aspect B5> A writing instrument comprising an ink storage portion having the water-based ink composition for a writing instrument according to any one of Aspects B1 to B4.
<Aspect B6> The writing instrument according to Aspect B5, wherein the writing instrument is a ballpoint pen.

### [ADVANTAGEOUS EFFECTS OF INVENTION]

According to the first present invention, it is possible to provide a novel ink composition for a water-based ballpoint pen, in which not only is oxidation degradation of an ink suppressed, but also suppressed in terms of bubble generation due to an impact, and which further has favorable temporal stability and preservative performance.

According to the second present invention, it is possible to provide a water-based ink composition for a writing instrument, in which favorable writing performance can be maintained even after storage under a low-temperature environment for a long period, without the occurrence of any adverse effect on a writing feeling and writing performance under a high load.

### DESCRIPTION OF EMBODIMENTS

### <<First Present Invention: Water-Based Ink Composition for Writing Instrument>>

The water-based ink composition for a writing instrument of the present invention has
an aqueous phase, and an oil phase dispersed in the state of an oil-in-water drop-type emulsion in the aqueous phase, wherein
at least one of the oil phase and the aqueous phase comprises a colorant,
the oil phase contains an oxygen remover and
a content of the oxygen remover is 3% by mass or more based on a mass of the oil phase, and
a content of the oxygen remover in the aqueous phase is 1.5% by mass or less based on a mass of the aqueous phase.

As described above, the inventors of the present invention have found that, if an oxygen remover is contained at a high concentration in a water-based ink for a writing instrument, oxidation degradation of the ink can be suppressed, but temporal stability of the ink may be degraded due to crystallization or the like of the oxygen remover in the ink and preservative performance of the ink may be impaired.

In contrast, the present inventors have found that an oxygen remover is contained at a relatively high concentration in an oil phase, as in the above configuration, and thus not only is oxidation degradation of an ink suppressed by use of the oxygen remover, but the problem of crystallization or the like of the oxygen remover can also be suppressed, as can also deterioration in preservative performance of the ink.

Furthermore, a conventional ink composition for a writing instrument sometimes experiences occurrence of cavitation in ink due to an impact caused by dropping of the pen body, a knocking impact by a knock-type ballpoint pen, or the like, thereby causing bubble generation. However, the present inventors have unexpectedly found that bubble generation can be suppressed by the above configuration.

### <<Second Present Invention: Water-Based Ink Composition for Writing Instrument>>

The water-based ink composition for a writing instrument of the second present invention has
an aqueous phase, and an oil phase dispersed in the state of an oil-in-water drop-type emulsion in the aqueous phase, wherein
at least one of the oil phase or the aqueous phase comprises a colorant, and
the oil phase contains a primary alcohol or fatty acid having the following general formula (a) or (b) and having branched chains and 8 or more carbon atoms: 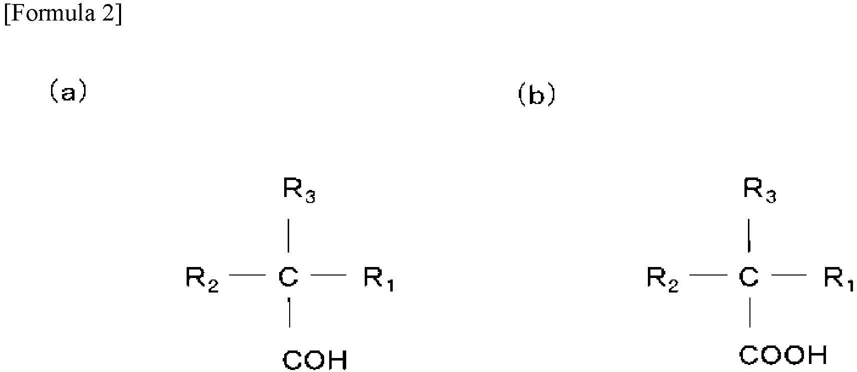
wherein R₁ and R₂ are each a linear or branched alkyl group, R₃ is hydrogen or a linear or branched alkyl group, and the number of carbon atoms in R₁, R₂ and R₃ in total is 6 or more.

A conventional oil-in-water drop-type ink, although has satisfied both the advantages of a water-based ink and an oil-based ink, has sometimes easily caused blurring in writing after storage under a low-temperature environment for a long period.

The present inventors have found that the reason for this blurring is because particles in an oil phase are frozen in storage of the oil-in-water drop-type ink in a low-temperature environment and, when these are molten, the particles in an oil phase mutually coalesce, thereby causing the particles in an oil phase to be coarsened and sometimes clog a pen tip. The present inventors have also found that an oil phase component is crystallized in this freezing of the particles in an oil phase, thereby promoting coalescence of such particles, and therefore coalescence of such particles can be suppressed by non-crystallization of the oil phase component in this freezing of the particles in an oil phase.

While the above blurring can be suppressed by regulating the viscosity of an oil phase in some cases, a smooth writing feeling and/or writing performance under a high load is sometimes impaired in such cases.

In contrast, the present inventors have found that a specified alcohol or fatty acid is contained in an oil phase, thereby inhibiting an oil phase component from becoming crystallized even in the case of freezing of particles in an oil phase and thus enabling coalescence of particles in an oil phase to be suppressed even in melting of particles in an oil phase. As a result, not only is blurring suppressed, but favorable writing performance can also be maintained even after storage under a low-temperature environment for a long period, without the occurrence of any adverse effect on a smooth writing feeling and favorable writing performance under a high load.

Hereinafter, each constituent component of the present invention will be described.

### <Oil Phase>

In the first present invention, an oil phase is dispersed in the state of an oil-in-water drop-type emulsion in an aqueous phase, and contains an oxygen remover. The content of the oxygen remover based on the mass of the oil phase is 3% by mass or more. The content based on the mass of the oil phase may be 4% by mass or more, or 5% by mass, and may be 20% by mass or less, 15% by mass or less, 13% by mass or less, 10% by mass or less, 8% by mass or less, or 6% by mass or less.

In the second present invention, an oil phase is dispersed in the state of an oil-in-water drop-type emulsion in an aqueous phase, and contains an alcohol or fatty acid having branched chains and 8 or more carbon atoms. The oil phase may contain any oxygen remover.

The oil phase may contain an oil phase component. The oil phase may contain any other component. Examples of such other component include a colorant, a resin and an organic solvent.

The viscosity of the oil phase may be 100 mPa·s or more, 150 mPa·s or more, 180 mPa·s or more and 200 mPa·s or more, 230 mPa·s or more, or 250 mPa·s or more, and may be 5000 mPa·s or less, 4800 mPa·s or less, or 4500 mPa·s or less. The viscosity which is in the above range is preferred from the viewpoint that a smooth writing feeling and favorable writing performance under a high load are obtained.

The viscosity is measured under conditions of a temperature of 25°C and a shear rate of 38 s⁻¹, and can be measured by use of a regular cone corresponding to an R range, with a known viscosity measurement machine, for example, TVE-20H (TOKISANGYO),.

The viscosity can be increased by allowing a resin to be contained in the oil phase, or can be decreased by allowing an organic solvent to be contained in the oil phase.

### (Oil Phase Component)

Examples of the oil phase component include an estolide being a fatty acid oligomer obtained by condensation of fatty acids each having a hydroxyl group or condensation of a fatty acid having a hydroxyl group and a fatty acid having no hydroxyl group, or an ester of the estolide and an alcohol.

The estolide or ester usable in the oil phase may be an estolide being a fatty acid oligomer obtained by condensation of fatty acids each having a hydroxyl group or condensation of a fatty acid having a hydroxyl group and a fatty acid having no hydroxyl group, or an ester of the estolide and an alcohol.

The fatty acid having a hydroxyl group in the estolide or ester usable in the oil phase, used here, can be any of various fatty acids conventionally used, and is, in particular, preferably a castor oil fatty acid whose main component is ricinoleic acid, a hydrogenated castor oil fatty acid whose main component is 12-hydroxystearic acid, or the like. These fatty acids may be used singly or may be mixed and used.

Examples of the fatty acid having no hydroxyl group include capric acid, lauric acid, myristic acid, palmitic acid, stearic acid, arachic acid, behenic acid, lignoceric acid, cerotic acid, melissic acid, oleic acid, linoleic acid, and linolenic acid, and furthermore a coconut oil fatty acid, a palm oil fatty acid, an olive oil fatty acid, tallowate, hydrogenated tallowate, or the like, containing such a component, can also be used.

In the present invention, the above fatty acid oligomer obtained by condensation of fatty acids each having a hydroxyl group, or the above fatty acid oligomer (estolide) obtained by condensation of a fatty acid having a hydroxyl group and a fatty acid having no hydroxyl group is used. Here, the "fatty acid oligomer" refers to a condensed product of a dimer or a higher oligomer. A condensed product of a dimer to a heptamer is preferred. While a monomer may be mixed in the fatty acid oligomer, a 1.5-mer or a higher oligomer, preferably 2.0-mer or a higher oligomer on average in the entire fatty acid oligomer is preferred from the viewpoint of solubility in the oil phase.

The content of the estolide or ester based on the mass of the oil phase may be 50% or more, 60% or more, or 70% or more, and may be 90% or less, or 85% or less.

The oil phase may further contain other oil phase component. Such other oil phase component may further contain, for example, the fatty acid having no hydroxyl group, by itself, in the estolide or ester.

### (Oxygen Remover)

The oxygen remover, in particular, the oxygen remover in the oil phase of the first present invention may be any oxygen remover, and is preferably a water-insoluble oxygen remover from the viewpoint of affinity with the component in the oil phase. The oxygen remover may be present in the state of being dissolved in the oil phase, or may be present in the state of being dispersed in the oil phase.

The water-insoluble oxygen remover is generally an oxygen remover having a solubility in water, of less than 5 mg/L. The water-insoluble oxygen remover used here is preferably an organic water-insoluble oxygen remover from the viewpoint of not having any effect on the color of the ink. The organic water-insoluble oxygen remover used here can be, for example, any organic water-insoluble oxygen remover such as tocopherol, terpene aldehyde and any derivative thereof. The derivative used here can be, for example, any fatty acid ester such as formate, acetate, and propionate. The water-insoluble oxygen remover may be at least one selected from them.

The content of the oxygen remover in the oil phase, based on the mass of the oil phase, may be 3% by mass or more, 4% by mass or more, or 5% by mass, and may be 20% by mass or less, 15% by mass or less, 13% by mass or less, 10% by mass or less, 8% by mass or less, or 6% by mass or less.

### (Alcohol or Fatty Acid)

The alcohol or fatty acid in the oil phase of the second present invention is a primary alcohol or fatty acid having branched chains and 8 or more carbon atoms. Specifically, the alcohol or fatty acid has the following general formula (a) or (b): 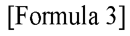 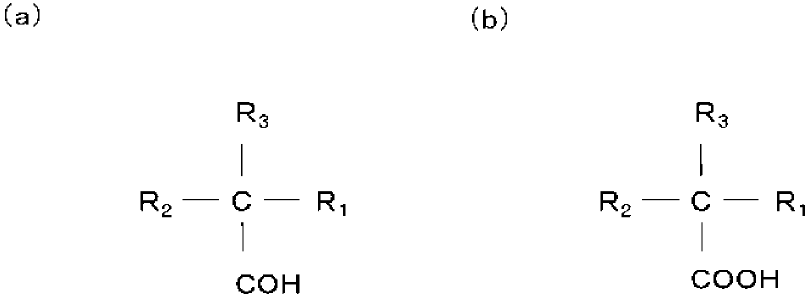 wherein R₁ and R₂ are each a linear or branched alkyl group, R₃ is hydrogen or a linear or branched alkyl group, and the number of carbon atoms in R₁, R₂ and R₃ in total is 6 or more.

The number of carbon atoms of the primary alcohol or fatty acid may be 8 or more, 10 or more, or 12 or more, and may be 22 or less, 20 or less, or 18 or less. In other words, the total number of carbon atoms of R₁, R₂ and R₃ in the formula may be 6 or more, 8 or more, or 10 or more, and may be 20 or less, 18 or less, or 16 or less.

In particular, at least two of the branched chains are each preferably an alkyl group having 4 or more carbon atoms, namely, the number of carbon atoms of each of at least two of R₁, R₂ and R₃ in the general formula is preferably 4 or more, from the viewpoint of the above effects are obtained.

The alcohol used here can be, for example, 2-ethyl-1-hexanol, 2-butyl-1-octanol, 2-hexyl-1-decanol, 2-octyl-1-decanol, 2-hexyl-1-dodecanol, 2-octyl-1-dodecanol, 3,5,5-trimethylhexanol, 8-methyl-(4-methylhexyl)-decanol, or 5,7,7-trimethyl-2-(1,3,3-trimethylbutyl)-octanol.

The fatty acid used here can be, for example, 5,7,7-trimethyl-2-(1,3,3-trimethylbutyl)-octanoic acid, 2-hexyldecanoic acid, 2-hexyldodecanoic acid, 2-octyldecanoic acid, or 8,9-dimethyl-2-(4,5-dimethylhexyl)-decanoic acid.

### (Resin)

The resin used here can be any resin, particularly, a resin to be used particularly for fixation of a coating film, and can be, for example, a sulfoamide resin, a maleic acid resin, a terpene resin, a terpenephenol resin, an ester gum, a xylene resin, an alkyd resin, a phenol resin, rosin, polyvinylpyrrolidone, polyvinyl acetal, polyvinyl alcohol, an acrylic resin, a melamine-based resin, a nitrocellulose-based resin, a urea resin, and any derivative thereof.

The content of the resin can be regulated, depending on the desired viscosity of the oil phase, and the content based on the mass of the oil phase, for example, may be 1% by mass or more, 2% by mass or more, or 3% by mass or more, and may be 50% by mass or less, 45% by mass or less, 40% by mass or less, 35% by mass or less, 30% by mass or less, 25% by mass or less, 20% by mass or less, 15% by mass or less, 10% by mass or less, 7% by mass or less, or 5% by mass or less.

### (Organic Solvent)

The organic solvent used here can be, for example, aromatics, alcohols, polyhydric alcohols, glycol esters, hydrocarbons, or esters. These solvents may be used singly or in combination thereof.

The aromatics used here can be, for example, benzyl alcohol, ethylene glycol monophenyl ether, ethylene glycol monobenzyl ether, propylene glycol monophenyl ether, diethylene glycol monophenyl ether, alkylsulfonic acid phenyl ester, butyl phthalate, ethylhexyl phthalate, tridecyl phthalate, ethylhexyl trimellitate, diethylene glycol dibenzoate, or dipropylene glycol dibenzoate.

The alcohols used here can be, for example, ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methyl amyl alcohol, 2-ethylbutanol, n-heptanol, 2-heptanol, 3-heptanol, n-octanol, nonanol, n-decanol, undecanol, n-decanol, tetradecanol, heptadecanol, cyclohexanol, or 2-methylcyclohexanol.

The polyhydric alcohols used here can be, for example, ethylene glycol, diethylene glycol, 3-methyl-1,3-butanediol, triethylene glycol, dipropylene glycol, 1,3-propanediol, 1,3-butanediol, 1,5-pentanediol, hexylene glycol, or octylene glycol.

The glycol esters used here can be, for example, methylisopropyl ether, ethyl ether, ethyl propyl ether, ethyl butyl ether, isopropyl ether, butyl ether, hexyl ether, 2-ethylhexyl ether, ethylene glycol monohexyl ether, ethylene glycol mono-2-ethyl butyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methoxy-3-methyl-1-butanol, 3-methoxy-1-butanol, propylene glycol monomethyl ether, propylene glycol monoethyl ether, propylene glycol monopropyl ether, propylene glycol monobutyl ether, propylene glycol t-butyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, or tetrapropylene glycol monobutyl ether.

The hydrocarbons used here can be, for example, linear hydrocarbon such as hexane, isohexane, heptane, octane, nonane, or decane, or cyclic hydrocarbon such as cyclohexane, methylcyclohexane, or ethylcyclohexane.

The esters used here can be, for example, propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, caprylic triglyceride, acetate tributyl citrate, octyl oxystearate, propylene glycol monoricinolate, methyl 2-hydroxyisobutyrate, or 3-methoxybutyl acetate.

The content of the organic solvent can be regulated, depending on the desired viscosity of the oil phase, and the content based on the mass of the oil phase, for example, may be 1% by mass or more, 2% by mass or more, or 3% by mass or more, and may be 50% by mass or less, 45% by mass or less, 40% by mass or less, 35% by mass or less, 30% by mass or less, 25% by mass or less, 20% by mass or less, 15% by mass or less, 10% by mass or less, 7% by mass or less, or 5% by mass or less.

### (Colorant)

The colorant (coloring material) used here can be any of conventional various colorants usable for inks, such as a dye, a pigment, or a mixture of a dye and a pigment. These colorants may be used singly or may be mixed and used.

The dye used here can be a water-insoluble dye. A water-insoluble dye is one which is insoluble in water at ordinary temperature, particularly, a dye which has a solubility in water at 20°C, of 1 g/L or less. The water-insoluble dye used here can be, for example, a salt-forming dye, a dispersive dye, and an oil-soluble dye, and among them, a salt-forming dye is preferably used from the viewpoint of chromogenic properties.

Examples of the salt-forming dye include a dye having an azo-based, metal complex salt azo-based, anthraquinone-based or metallophthalocyanine-based chemical structure, and, for example, Valifast (registered trademark) Black 1807, Valifast (registered trademark) Blue 2620, Valifast (registered trademark) Brown 2402, Valifast (registered trademark) Green 1501, Valifast (registered trademark) Orange 2210, Valifast (registered trademark) Pink 2310, Valifast (registered trademark) Red 1355, Valifast (registered trademark) VIOLET 1701, or Valifast (registered trademark) Yellow 1101 from ORIENT CHEMICAL INDUSTRIES CO., LTD., can be used.

The dispersive dye used here can be, for example, at least one dye selected from C.I. Disperse Yellow 198, C.I. Disperse Yellow 42, C.I. Disperse Red 92, C.I. Disperse Violet 26, C.I. Disperse Violet 35, C.I. Disperse Blue 60, and C.I. Disperse Blue 87.

The oil-soluble dye used here can be, for example, Oil Black 860, Oil Blue 613, Oil Brown BB, Oil Green 530, Oil Orange 201, Oil Pink 312, Oil Red 5B, Oil Scarlet 318, or Oil Yellow 105 each from ORIENT CHEMICAL INDUSTRIES CO., LTD.

The pigment used here can be, for example, any of conventionally known inorganic and organic pigments such as titanium oxide, a pigment- or dye-containing resin particle pigment, a pseudo-pigment in which a resin emulsion is colored by a dye or a pigment, a white plastic pigment, a photoluminescent pigment, a pigment in which silica or mica is used as a substrate and a surface layer is multi-layer coated with iron oxide or titanium oxide, a thermally color-changing pigment, and optically color-changing particles, without any limitation.

The inorganic pigment used here can be, for example, carbon black, titanium black, zinc flower, rouge, aluminum, chromium oxide, iron black, cobalt blue, yellow iron oxide, viridian, zinc sulfide, lithopone, cadmium yellow, vermilion, cadmium red, lead yellow, molybdate orange, zinc chromate, strontium chromate, white carbon, clay, talc, ultramarine, precipitated barium sulfate, baryte powder, calcium carbonate, white lead, Prussian white, Prussian blue, manganese violet, aluminum powder, or brass powder.

Examples of the organic pigment include an azo lake, an insoluble azo pigment, a chelate azo pigment, a phthalocyanine pigment, perylene and perynone pigments, and a nitroso pigment. Examples of the organic pigment include C.I. Pigment Blue 17, C.I. Pigment Blue 15, C.I. Pigment Blue 17, C.I. Pigment Blue 27, C.I Pigment Red 5, C.I Pigment Red 22, C.I Pigment Red 38, C.I Pigment Red 48, C.I Pigment Red 49, C.I Pigment Red 53, C.I Pigment Red 57, C.I Pigment Red 81, C.I Pigment Red 104, C.I Pigment Red 146, C.I Pigment Red 245, C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C.I. Pigment Violet 23, C.I. Pigment Violet 50, and C.I. Pigment Green 7.

Examples of the thermally color-changing pigment can include a thermally color-changing pigment produced by microencapsulation of a thermally color-changing composition including at least a leuco dye functioning as a color former, and a developer serving as a component having the ability of color formation of the leuco dye and a color-changing temperature adjuster capable of controlling the color-changing temperature in coloring of the leuco dye and the developer so that a predetermined average particle size (for example, 0.1 to 6 µm) is achieved. The average particle size, for example, may be 0.1 µm or more, 0.2 µm or more, 0.3 µm or more, 0.5 µm or more, 0.7 µm or more, or 0.9 µm or more, and may be 6 µm or less, 5 µm or less, 4 µm or less, 3 µm or less, 2 µm or less, or 1 µm or less.

The optically color-changing particles used here can be, for example, optically color-changing particles constituted from at least one or more selected from optically color-changing substances such as a photochromic dye and a fluorescent dye, and a resin such as a terpene phenolic resin. Examples of the optically color-changing particles can include optically color-changing particles produced by microencapsulation of an optically color-changing composition including at least one or more selected from optically color-changing substances such as a photochromic dye and a fluorescent dye, an organic solvent, and additive(s) such as an antioxidant, a light stabilizer, and/or a sensitizer so that a predetermined average particle size (for example, 0.1 to 6 µm) is achieved.

The optically color-changing particles can have, for example, one having the property of being colorless in an indoor lighting environment (lighting equipment selected from indoor incandescent lamp, fluorescent lamp, lamp, white LED, and the like) and providing color-forming in an ultraviolet radiation environment (environment of irradiation with a radiation at a wavelength of 200 to 400 nm, or sunlight including ultraviolet light), by suitable use of the above optically color-changing substance.

The "average particle size" in the present invention (including Examples and the like) is appropriately selected, depending on the size of particles as a measurement object, and is a value of a histogram average particle size (D50) calculated on the volume basis in a scattering intensity distribution measured by a dynamic light scattering method in the case of particles having a size of less than about 1 µm and is a value of a median size (D50) calculated on the volume basis by a laser diffraction method in the case of particles having a size of 1 µm or more. The average particle size can be determined by measurement with a particle size analyzer [Microtrac HRA9320-X100 (Nikkiso Co., Ltd.)].

Examples of the microencapsulation method of the thermally color-changing pigment and the optically color-changing particle can include an interfacial polymerization method, an interfacial polycondensation method, an in-situ polymerization method, a submerged hardening coating method, a phase separation method from an aqueous solution, a phase separation method from an organic solvent, a melt dispersion cooling method, an air suspension coating method, and a spray drying method, and the method can be appropriately selected, depending on the application.

A thermally color-changing microcapsule pigment can be produced by, for example, a method including following steps, in particular, a method including performing the following steps in the listed order, in the phase separation method from an aqueous solution:
(1) heating and melting a leuco dye, a developer, and a color-changing temperature adjuster,
(2) loading the leuco dye, the developer, and the color-changing temperature adjuster heated and molten, to an emulsifier solution, and heating and stirring the mixture and thus dispersing the resultant in the form of an oil droplet, to produce a dispersion liquid,
(3) gradually loading, as a capsule membrane material, a resin raw material capable of forming a wall membrane, such as a urethane resin, an epoxy resin, or an amino resin, for example, an amino resin solution, specifically, an amino resin solution such as an aqueous methylol melamine solution, a urea solution, or a benzoguanamine solution, to the dispersion liquid, to react the resin raw material and then generate a capsule membrane, thereby obtaining a thermally color-changing microcapsule pigment, and
(4) filtering the dispersion liquid including the thermally color-changing microcapsule pigment.

The types, the amounts, and the like of the leuco dye, the developer and the color-changing temperature adjuster in the thermally color-changing pigment can be suitably combined, to set the color-formation temperature and the decoloring temperature of each color to suitable temperatures.

These colorants can be used singly or as a mixture of two or more kinds thereof. Among these colorants, a pigment to be dispersed in water, a resin particle pigment, a pseudo-pigment, a white plastic pigment, a pigment of a multi-layer coating, a thermally color-changing pigment, and optically color-changing particles are varied in average particle size, depending on the ball diameter, the compositional ratio/viscosity of the ink, or the like, and one having an average particle size of 0.02 to 6 µm is desired. The average particle size may be, for example, 0.02 µm or more, 0.05 µm or more, 0.07 µm or more, 0.10 µm or more, 0.20 µm or more, 0.30 µm or more, 0.50 µm or more, 0.70 µm or more, or 0.90 µm or more, and may be 6 µm or less, 5 µm or less, 4 µm or less, 3 µm or less, 2 µm or less, or 1 µm or less.

The content of such a colorant can be appropriately increased or decreased, depending on the drawn line density of the ink, and the content based on the mass of the water-based ink composition for a writing instrument may be 0.1% by mass or more, 0.3% by mass or more, 0.5% by mass or more, 0.7% by mass or more, 0.9% by mass or more, or 1.0% by mass or more, and is preferably 40% by mass or less, 35% by mass or less, 30% by mass or less, 25% by mass or less, 20% by mass or less, 15% by mass or less, or 10% by mass or less.

### <Emulsifier Component>

The emulsifier component used here can be any emulsifier, and, for example, an emulsifier having one, or a plurality of aromatic rings in a molecular backbone.

The aromatic emulsifier usable in the ink composition of the present invention is not particularly limited as long as it has one or more aromatic rings, and can be, for example, a polycyclic phenyl type non-ionic surfactant such as polyoxyethylene distyrenated phenyl ether, polyoxyethylene monostyrenated phenyl ether, or polyoxyethylene cumyl phenyl ether, and an ionic surfactant such as sulfate of such a non-ionic surfactant.

The number of moles of ethylene oxide (EO) added in the emulsifier is preferably 40 mol or more, 45 mol or more, or 50 mol or more from the viewpoint of suppression of coalescence of particles in the oil phase by a long ethylene oxide chain.

In addition to the emulsifier, an emulsifier may be further used which is much likely to be toward the oil phase and which is small in number of moles of ethylene oxide added, specifically, has a number of moles of ethylene oxide added of 3 mol or more, 4 mol or more, or 5 mol or more, and 15 mol or less, 12 mol or less, or 10 mol or less. A combination of an emulsifier which is much likely to be toward the oil phase and an emulsifier which is much likely to be toward the aqueous phase may be preferred from the viewpoint of an increase in micelle concentration at the interface and an improvement in stability of the emulsion.

In terms of a HLB value (hydrophile-lyophile balance value), one or more emulsifiers having a HLB value of at least 15 or more are preferably used for the non-ionic surfactant from the viewpoint of suppression of excess incorporation of the emulsifier into the oil phase.

Any emulsifier having other structure, other than the surfactant having an aromatic ring in its molecule, may be additionally used as the emulsifier component. Examples of the emulsifier include polyoxyethylene hardened castor oil, a linear hydrocarbon type non-ionic surfactant such as polyoxyethylene alkyl (C10 to C18) ester, and a sorbitan derivative.

The content of the emulsifier component, based on 100 parts by mass of the oil phase, may be 5 parts by mass or more, 10 parts by mass or more, 15 parts by mass or more, 20 parts by mass or more, 25 parts by mass or more, 30 parts by mass or more, 35 parts by mass or more, 40 parts by mass or more, or 45 parts by mass or more, and may be 150 parts by mass or less, 140 parts by mass or less, 130 parts by mass or less, 120 parts by mass or less, 110 parts by mass or less, 100 parts by mass or less, 90 parts by mass or less, 80 parts by mass or less, 70 parts by mass or less, 65 parts by mass or less, 60 parts by mass or less, or 55 parts by mass or less.

### <Aqueous Phase>

The aqueous phase contains at least water, but may also contain a colorant.

In particular, in the first present invention, the content of the oxygen remover in the aqueous phase is preferably low from the viewpoint of an improvement in temporal stability of the oil-in-water drop-type ink for a writing instrument. Specifically, the content of the oxygen remover in the aqueous phase, based on the mass of the aqueous phase, is preferably 1.5% by mass or less, 1.2% by mass or less, 1.0% by mass or less, 0.5% by mass or less, 0.3% by mass or less, or 0.1% by mass or less, or the aqueous phase preferably does not contain the oxygen remover. Examples of the oxygen remover include the water-insoluble oxygen remover, and a water-soluble oxygen remover, for example, ascorbic acid or N-acetylcysteine.

The aqueous phase may further contain a resin, an organic solvent, and/or the like.

### (Water)

The water used here can be, for example, purified water or ion-exchange water.

### (Resin)

The resin used here is preferably any resin usable for fixation of a coating film, for example, a derivative of an acrylic resin, in particular, a styrene-acrylic resin, among resins exemplified with respect to the oil phase.

The content of the resin, based on the mass of the aqueous phase, is preferably 1% by mass or more, 2% by mass or more, or 3% by mass or more from the viewpoint of imparting sufficient fixation properties, and is preferably 50% by mass or less, 45% by mass or less, 40% by mass or less, 35% by mass or less, 30% by mass or less, 25% by mass or less, 20% by mass or less, 15% by mass or less, 10% by mass or less, 7% by mass or less, or 5% by mass or less from the viewpoint of inhibiting the viscosity of the ink from being excessively high.

### (Organic Solvent)

The organic solvent used here can be, for example, aromatics, alcohols, polyhydric alcohols, glycol esters, hydrocarbons, or esters. These solvents may be used singly or in combination thereof. These solvents used here can be those exemplified with respect to the oil phase.

### (Colorant)

The colorant used here can be any of various colorants usable for conventional inks, such as a dye, a pigment, or a mixture of a dye and a pigment. These colorants may be used singly or may be mixed and used.

The dye used here can be a water-soluble dye. The water-soluble dye used here can be any dye to be dissolved or dispersed in water, and examples include acidic dyes such as eosin, Phloxine, Water Yellow #6-C, Acid Red, Water Blue #105, Brillant Blue FCF, and Nigrosine NB; direct dyes such as Direct Black 154, Direct Sky Blue 5B, and Violet BB; and basic dyes such as rhodamine and methyl violet.

The pigment used here can be any of those exemplified with respect to the oil phase.

The content of such a color material can be appropriately increased or decreased, depending on the drawn line density of the ink, and the content based on the total amount of the water-based ink composition may be 0.1% by mass or more, 0.3% by mass or more, 0.5% by mass or more, 0.7% by mass or more, 0.9% by mass or more, or 1.0% by mass or more, and is preferably 40% by mass or less, 35% by mass or less, 30% by mass or less, 25% by mass or less, 20% by mass or less, 15% by mass or less, or 10% by mass or less.

### <Other Component>

Examples of other component include a dispersant, a leveling agent, a rust inhibitor, a preservative agent, a lubricant, and a surface modifier. The leveling agent used here can be, for example, a fluorine-based surfactant, silicone oil, or a phosphate-based surfactant. The surface modifier used here can be, for example, a silicon-based surface modifier.

### <<Writing Instrument>>

The writing instrument contains the oil-in-water drop-type ink composition for a writing instrument. The writing instrument may be provided with an ink storage portion, a writing portion and a holding portion, and in this case, a water-based ink may be stored in the ink storage portion. The writing instrument may be a ballpoint pen.

### <Ink Storage Portion>

The water-based ink composition for a writing instrument is stored in the ink storage portion.

Any article can be used as the ink storage portion as long as it can store the ink and feed the ink to the writing portion, and the ink storage portion may be a direct liquid-type ink storage portion provided with a collector structure (ink holding mechanism), or may be an inner cotton-type ink storage portion.

The ink storage portion may be integrated with the writing portion. In particular, in a case where the writing instrument is a ballpoint pen, the ink storage portion may be a refill for a writing instrument.

In particular, in a case where the ink storage portion is a refill for a ballpoint pen, the thickness of the outer wall of the ink storage portion, namely, the value of (outer diameter - inner diameter)/2 of the ink storage portion may be 0.3 mm or more, 0.5 mm or more, or 0.7 mm or more, and may be 2.0 mm or less, 1.8 mm or less, 1.5 mm or less, or 1.2 mm or less. In particular, in the first present invention, the thickness of the outer wall of the ink storage portion is preferably such a value from the viewpoint of suppression of penetration of oxygen into the ink and thus suppression of bubble generation.

### <Writing Portion>

The writing portion is preferably a writing portion having a ballpoint pen tip at a tip portion.

The ballpoint pen tip may be configured by a ball, and a holder which rotatably holds the ball. The ball may be configured by any material to be used for a ball of a ballpoint pen, and may be configured by, for example, stainless steel, a cemented carbide alloy, or ceramics. The shape of the ballpoint pen tip is not particularly limited, and may be, for example, a crump shape or a needle shape.

Furthermore, the surface roughness Ra of the ball is desirably less than 10 nm from the viewpoint of writing performance, and particularly preferably, the surface roughness Ra of the ball in such a writing ball is preferably 4 nm or less.

The "surface roughness Ra" in the present invention (including Examples described below) is measured according to JIS B0601 (geometric specification-surface texture of product), except for setting of conditions of a lens magnification of 50×, an evaluation length of 100 µm, and a 25-µm Gaussian filter in a non-contact surface profile measuring instrument (NewView 7200, Zygo).

### <Holding Portion>

The holding portion may be a portion capable of holding the writing instrument of the present invention by hand, and may have a hollow structure in which the ink storage portion can be received. The holding portion may have, for example, a cylindrical shape or a polygonal cylindrical shape.

### EXAMPLES

### <<First Present Invention>>

The first present invention is specifically described with reference to Examples and Comparative Examples, but the first present invention is not limited thereto.

### <<Production of Oil-in-Water Drop-Type Ink Composition for Writing Instrument>>

### <Example A1>

Mixed were 7.5 parts by mass of a condensed fatty acid ester (MINERASOL LB-601, ITOH OIL CHEMICALS CO., LTD., ester A), 2 parts by mass of oleic acid (Lunac OV, Kao Corporation), and 0.5 parts by mass of dl-α-tocopherol (tocopherol, Mitsubishi Chemical Group Corporation, tocopherol A) as an oxygen remover, these were warmed to a temperature of 50°C to 60°C under stirring, and thus an oil-based solution was obtained in which these were completely dissolved.

An emulsifier solution was separately produced by dissolving polyoxyethylene styrenated phenyl ether (NEWCOL N780 (80 mol of ethylene oxide added) Nippon Nyukazai Co., Ltd.) as an emulsifier component, in purified water, under stirring. Next, the emulsifier solution was gradually added to the oil-based solution, to perform phase inversion from water-in-oil drop-type (w/o) to oil-in-water drop-type (o/w), and thus an oil-in-water drop-type emulsion was obtained.

Thereafter, a pigment dispersion was added to the oil-in-water drop-type emulsion under stirring, and thus 100 parts by mass of an ink composition for a writing instrument, of Example A1, was obtained. The pigment dispersion included 6.7 parts by mass of carbon black as a pigment, 1.3 parts by mass of a styrene-acrylic resin as a dispersant, 2 parts by mass of ethylene glycol as an organic solvent, 0.6 parts by mass of phosphate as a lubricant, 0.6 parts by mass of triethanolamine as a pH adjuster, and 38.8 parts by mass of water. The details of the emulsifier solution, the pigment dispersion component and the additive component used are shown in Table 1.

### <Examples A2 to A3 and Comparative Examples A1 to A3>

Each ink composition for a writing instrument, of Examples A2 to A3 and Comparative Examples A1 to A3, was produced in the same manner as in Example 1 except that the substances and the contents used were changed as shown in Table 1.

The details of substances shown in Table 1 are as follows:
Ester A: MINERASOL LB-601, ITOH OIL CHEMICALS CO., LTD.
Ester B: MINERASOL LB-702, ITOH OIL CHEMICALS CO., LTD.
Tocopherol A: dl-α-tocopherol
Tocopherol B: dl-α-tocopherol acetate
Tocopherol C: d-δ-tocopherol
Carbon black: MCF-88, Mitsubishi Chemical Group Corporation
Styrene-acrylic resin: Joncryl63J, BASF SE
Phosphate: Phosphanol RB-410, TOHO Chemical Industry Co., Ltd.

### <<Evaluation>>

Each of the water-based ink compositions for writing instruments, produced, was packed in a ballpoint pen, and thus a water-based ballpoint pen was produced. Specifically, the shaft of a ballpoint pen (Signo UM-100, MITSUBISHI PENCIL COMPANY, LIMITED) was used, a refill composed of an ink housing pipe made of polypropylene, having an outer diameter of 6.0 mm, an inner diameter of 3.8 mm, and a length of 113 mm, a stainless tip (cemented carbide alloy ball, a ball diameter of 0.38 mm, a surface roughness of less than 10 nm) and a joint linking the housing pipe and the tip was charged with the ink composition, and an ink rear end was charged with an ink follower. These were used to perform the following evaluation tests.

### <Writing Performance>

A mechanical writing test in which spiral writing of 1000 m (termination) was made under conditions of a weight of 100 gf, a writing angle of 75 degrees, and a writing rate of 4.5 mm/min, and the appearance of a drawn line was visually evaluated. The evaluation criteria are as follows.
A: No blurring observed in the drawn line.
B: Blurring observed in the drawn line.

### <Bubble Suppression Performance>

The ballpoint pen was dropped onto a cedar plank from a height of 1 m with the pen tip being allowed to face upward, and then was left to still stand in a constant-temperature bath at 50°C for 14 days with the pen tip being in the state of facing downward, and the state of bubble generation at the interface between the ink composition and the ink follower in the ink housing pipe was visually confirmed, thereby evaluating bubble suppression performance due to an impact. The evaluation criteria are as follows.
A: no bubble generation observed.
B: one bubble of about 0.5 mm confirmed.
C: bubbles of about 0.5 mm confirmed, or a larger bubble confirmed.

### <Temporal Stability>

After the ballpoint pen produced was retained at 50°C for 3 months, writing performance was confirmed. The evaluation criteria are as follows.
A: no change from the ballpoint pen before retention.
B: a slightly reduced ink flow rate as compared with that before retention.
C: a remarkably reduced ink flow rate as compared with that before retention.

### <Preservative Performance>

The preservative performance was evaluated by a storage efficacy test prescribed in the Japanese Pharmacopoeia. Specifically, the number of fungi in the produced water-based ink composition for a writing instrument was measured immediately after production and 14 days after production, and the change in the number of fungi was confirmed. The evaluation criteria are as follows:
A: decreasing trend of the number of fungi
B: no increase or decrease in the number of fungi.
C: increasing trend of the number of fungi.

The configurations and evaluation results of Examples and Comparative Examples are shown in Table 1.

### [Table 1]

**Table 1**

| | | | | Example A1 | Example A2 | Example A3 | Comparative Example A1 | Comparative Example A2 | Comparative Example A3 |
|---|---|---|---|---|---|---|---|---|---|
| Oil phase | Condensed fatty acid ester | | Type | Ester A | Ester B | Ester A | Ester A | Ester A | Ester A |
| | | | parts by mass | 7.5 | 7.5 | 7.5 | 8 | 8 | 8 |
| | Oleic acid | | parts by mass | 2 | 2 | 2 | 2 | 2 | 2 |
| | Oxygen remover | | Type | Tocopherol A | Tocopherol B | Tocopherol C | | | |
| | | | parts by mass | 0.5 | 0.5 | 0.5 | | | |
| Aqueous phase | Emulsifier solution | Emulsifier | parts by mass | 5 | 5 | 5 | 5 | 5 | 5 |
| | | Water | parts by mass | 35 | 35 | 35 | 35 | 35 | 35 |
| | Pigment dispersion | Colorant | parts by mass | 6.7 | 6.7 | 6.7 | 6.7 | 6.7 | 6.7 |
| | | Resin | parts by mass | 1.3 | 1.3 | 1.3 | 1.3 | 1.3 | 1.3 |
| | | Organic solvent | parts by mass | 2 | 2 | 2 | 2 | 2 | 2 |
| | | Phosphate | parts by mass | 0.6 | 0.6 | 0.6 | 0.6 | 0.6 | 0.6 |
| | | pH adjuster | parts by mass | 0.6 | 0.6 | 0.6 | 0.6 | 0.6 | 0.6 |
| | | Oxygen remover | Type | | | | | Ascorbic acid | N-acetylcysteine |
| | | | parts by mass | | | | | 1.7 | 1.7 |
| | | Water | parts by mass | 38.8 | 38.8 | 38.8 | 38.8 | 37.1 | 37.1 |
| Evaluation results | Blurring | | | A | A | A | B | A | A |
| | Bubble suppression performance | | | A | A | A | C | B | B |
| | Temporal stability | | | A | A | A | A | C | B |
| | Preservative performance | | | A | A | A | A | B | C |

It can be understood from Table 1 that the water-based ink composition for a writing instrument of each of Examples A1 to A3, in which the oil phase contained 3% by mass or more of the oxygen remover based on the mass of the oil phase, simultaneously satisfied favorable writing performance, bubble suppression performance, temporal stability, and preservative performance.

On the other hand, it can be understood that the water-based ink composition for a writing instrument of Comparative Example A1, in which the oil phase did not contain any oxygen remover, was not favorable in writing performance or bubble suppression performance.

The water-based ink composition for a writing instrument of each of Comparative Examples A2 to A3, in which the aqueous phase contained the oxygen remover, was favorable in writing performance, but was not sufficient in bubble suppression performance, temporal stability and preservative performance. It can be understood from this that the oil phase was required to contain the oxygen remover in order for favorable writing performance, bubble suppression performance, temporal stability, and preservative performance to be simultaneously satisfied.

### <<Second Present Invention>>

The second present invention is specifically described with reference to Examples and Comparative Examples, but is not limited thereto.

### <<Evaluation of Frozen State>>

Components constituting the oil phase were mixed, were warmed to a temperature of 50°C to 60°C under stirring, and thus an oil phase solution was obtained in which these were completely dissolved.

The components constituting the oil phase were an alcohol whose type was shown in Table 1, at a content shown in Table 1, 5% by mass of dl-α-tocopherol (tocopherol, Mitsubishi Chemical Group Corporation) as an oxygen remover, and a condensed fatty acid ester (MINERASOL LB-601, ITOH OIL CHEMICALS CO., LTD.) as the balance.

The details of alcohols shown in Table 2 are as follows.
Branched alcohol A: 5,7,7-trimethyl-2-(1,3,3-trimethylbutyl)-octanol
Branched alcohol B: 2-ethyl-1-hexanol
Branched alcohol C: 2-butyl-1-octanol
Branched alcohol D: 2-hexyl-1-decanol
Branched alcohol E: C14-C15 branched alcohol (ISALCHEM145, SASOL Ltd.)
Linear alcohol: 1-decanol

Each of the obtained oil phase solutions was left to still stand at a temperature shown in Table 2 for one day, and the state of the oil phase was visually confirmed. The evaluation criteria are as follows.
A: a liquid state.
B: flowable, but partially precipitated (frozen).
C: non-flowable and frozen, but no crystal observed.
D: frozen, and partially crystallized.
E: entirely clearly crystallized.

The results are shown in Table 2.

### [Table 2]

**Table 2**

| Content of branched higher alcohol in oil phase | | 10% | | | 20% | | | 30% | | | 40% | | | 50% | | |
|---|---|---|---|---|---|---|---|---|---|---|---|---|---|---|---|---|
| Freezing temperature | | -20°C 1D | -10°C 1D | 0°C 1D | -20°C 1D | -10°C 1D | 0°C 1D | -20°C 1D | -10°C 1D | 0°C 1D | -20°C 1D | -10°C 1D | 0°C 1D | -20°C 1D | -10°C 1D | 0°C 1D |
| Branched alcohol A | 5,7,7-Trimethyl-2-(1,3,3-trimethylbutyl) -octanol | D | B | A | B | A | A | A | A | A | A | A | A | A | A | A |
| Branched alcohol B | 2-Ethyl-1-hexanol | D | D | A | D | C | B | D | C | A | C | C | A | C | C | A |
| Branched alcohol C | 2-Butyl-1-octanol | D | D | B | D | C | A | D | C | A | C | C | A | C | C | A |
| Branched alcohol D | 2-Hexyl-1-decanol | C | C | B | D | D | B | D | D | A | D | C | A | D | C | A |
| Branched alcohol E | C14-C15 branched alcohol | C | C | B | D | D | B | D | D | A | C | C | A | C | C | A |
| Linear alcohol | 1-Decanol | E | E | C | E | E | B | E | E | A | E | D | A | E | D | A |

It could be understood from Table 2 that each of branched alcohols A to E could inhibit the oil phase from being frozen as compared with a linear alcohol also in all the above conditions.

### <<Production of Oil-in-Water Drop-Type Ink Composition for Writing Instrument>>

### <Example B1>

Mixed were 7.5 parts by mass of a condensed fatty acid ester (MINERASOL LB-601, ITOH OIL CHEMICALS CO., LTD., ester A), 2 parts by mass of oleic acid (Lunac OV, Kao Corporation), and 0.5 parts by mass of dl-α-tocopherol (tocopherol, Mitsubishi Chemical Group Corporation, tocopherol A) as an oxygen remover, these were warmed to a temperature of 50°C to 60°C under stirring, and thus an oil-based solution was obtained in which these were completely dissolved.

An emulsifier solution was separately produced by dissolving polyoxyethylene styrenated phenyl ether (NEWCOL N780, Nippon Nyukazai Co., Ltd.) as an emulsifier component, in purified water, under stirring. Next, the emulsifier solution was gradually added to the oil-based solution, to perform phase inversion from water-in-oil drop-type (w/o) to oil-in-water drop-type (o/w), and thus an oil-in-water drop-type emulsion was obtained.

Thereafter, a pigment dispersion was added to the oil-in-water drop-type emulsion under stirring, and thus 100 parts by mass of an ink composition for a writing instrument, of Example B1, was obtained. The pigment dispersion included 6.7 parts by mass of carbon black as a pigment, 1.3 parts by mass of a styrene-acrylic resin as a dispersant, 2 parts by mass of ethylene glycol as an organic solvent, 0.6 parts by mass of phosphate as a lubricant, 0.6 parts by mass of triethanolamine as a pH adjuster, and 38.8 parts by mass of water. The details of the emulsifier solution, the pigment dispersion component and the additive component used are shown in Table 3.

### <Examples B2 to B6 and Comparative Examples B1 to B4>

Each water-based ink composition for a writing instrument, of Examples B2 to B6 and Comparative Examples B1 to B4, was produced in the same manner as in Example B1 except that the substances and the contents used were changed as shown in Table 3.

Alcohols shown in Table 3 are the same as those in Table 2, and the details of other substances shown in Table 3 are as follows:
Ester A: MINERASOL LB-601, ITOH OIL CHEMICALS CO., LTD.
Ester B: MINERASOL LB-702, ITOH OIL CHEMICALS CO., LTD.
Tocopherol: dl-α-tocopherol
Carbon black: MCF-88, Mitsubishi Chemical Group Corporation
Styrene-acrylic resin: Joncryl63J, BASF SE
Phosphate: Phosphanol RB-410, TOHO Chemical Industry Co., Ltd.

The viscosity of each of the resulting water-based ink compositions for writing instruments was measured with TVE-20H and a regular cone corresponding to an R range under conditions of a temperature of 25°C and a shear rate of 38 s⁻¹.

### <<Evaluation>>

Each of the water-based ink compositions for writing instruments, produced, was packed in a ballpoint pen, and thus a water-based ballpoint pen was produced. Specifically, the shaft of a ballpoint pen (Signo UM-100, MITSUBISHI PENCIL COMPANY, LIMITED) was used, a refill composed of an ink housing pipe made of polypropylene, having an outer diameter of 60 mm, an inner diameter of 3.8 mm, and a length of 113 mm, a stainless tip (cemented carbide alloy ball, a ball diameter of 0.38 mm, a surface roughness of less than 10 nm) and a joint linking the housing pipe and the tip was charged with the ink composition, and an ink rear end was charged with an ink follower. These were used to perform the following evaluation tests.

### <Writing Feeling before Low-Temperature Storage>

Writing was performed, and the writing feeling was sensorily evaluated. The evaluation criteria are as follows.
A: smooth writing feeling.
B: slight scratch feeling.
C: remarkable scratch feeling.

### <Writing Performance under High Load before Low-Temperature Storage>

Writing was performed by pushing the tip of the ballpoint pen onto a writing surface at a load of 200 gf. The evaluation criteria are as follows.
A: no occurrence of blurring at all.
B: the occurrence of blurring, but a sufficiently recognizable drawn line.
C: the occurrence of blurring at a level having a remarkable effect on recognition of a drawn line.

### <Writing Performance after Low-Temperature Storage>

The ballpoint pen produced was stored in an environment at -20°C for 2 weeks. Thereafter, the ballpoint pen was stored in an environment at 25°C for one day, and writing was performed. The evaluation criteria are as follows.
A: no occurrence of blurring at all.
B: the occurrence of blurring, but a sufficiently recognizable drawn line.
C: the occurrence of blurring at a level having a remarkable effect on recognition of a drawn line.

The configurations and evaluation results of Examples and Comparative Examples are shown in Table 3.

### [Table 3]

**Table 3**

| | | | | Example B1 | Example B2 | Example B3 | Example B4 | Example B5 | Example B6 | Comparative Example B1 | Comparative Example B2 | Comparative Example B3 | Comparative Example B4 |
|---|---|---|---|---|---|---|---|---|---|---|---|---|---|
| Oil phase | Condensed fatty acid ester | | Type | Ester A | Ester B | Ester A | Ester A | Ester A | Ester A | Ester A | Ester A | Ester A | Ester A |
| | | | parts by mass | 7.5 | 7.5 | 4.5 | 7.5 | 4.5 | 4 | 9.5 | 7.5 | 4.5 | 2.5 |
| | Alcohol or fatty acid | | Type | Branched alcohol A | Branched fatty acid | Branched alcohol B | Branched alcohol D | Branched alcohol A | Branched alcohol B | | Linear alcohol | | |
| | | | parts by mass | 2 | 2 | 2 | 2 | 3 | 2 | | 2 | | |
| | Resin | | parts by mass | | | 3 | | | 2.5 | 1 | | | 7 |
| | Organic solvent | | parts by mass | | | | | 2 | | | | 5 | |
| | Oxygen remover | | parts by mass | 0.5 | 0.5 | 0.5 | 0.5 | 0.5 | 0.5 | 0.5 | 0.5 | 0.5 | 0.5 |
| Aqueous phase | Emulsifier solution | Emulsifier | parts by mass | 5 | 5 | 5 | 5 | 5 | 5 | 5 | 5 | 5 | 5 |
| | | Water | parts by mass | 35 | 35 | 35 | 35 | 35 | 35 | 35 | 35 | 35 | 35 |
| | Pigment dispersion | Colorant | parts by mass | 6.7 | 6.7 | 6.7 | 6.7 | 6.7 | 6.7 | 6.7 | 6.7 | 6.7 | 6.7 |
| | | Resin | parts by mass | 1.3 | 1.3 | 1.3 | 1.3 | 1.3 | 1.3 | 1.3 | 1.3 | 1.3 | 1.3 |
| | | Organic solvent | parts by mass | 2 | 2 | 2 | 2 | 2 | 2 | 2 | 2 | 2 | 2 |
| | | Phosphate | parts by mass | 0.6 | 0.6 | 0.6 | 0.6 | 0.6 | 0.6 | 0.6 | 0.6 | 0.6 | 0.6 |
| | | pH adjuster | parts by mass | 0.6 | 0.6 | 0.6 | 0.6 | 0.6 | 0.6 | 0.6 | 0.6 | 0.6 | 0.6 |
| | | Water | parts by mass | 38.8 | 38.8 | 38.8 | 38.8 | 38.8 | 38.8 | 38.8 | 38.8 | 38.8 | 38.8 |
| Viscosity of oil phase | | | | 908 | 560 | 4300 | 1330 | 280 | 3520 | 2402 | 560 | 78 | 7200 |
| Evaluation results | Writing feeling before low-temperature storage | | | A | A | A | A | A | A | A | A | B | C |
| | Writing performance under high load before low-temperature storage | | | A | A | A | A | A | A | A | A | C | B |
| | Writing performance before low-temperature storage | | | A | A | A | A | A | A | C | C | A | A |

It could be understood from Table 3 that the water-based ink composition for a writing instrument of each Example, in which the oil phase contained a primary alcohol or fatty acid having branched chains and 8 or more carbon atoms, was favorable in all of the writing feeling before low-temperature storage and the writing performance in writing under a high load, and the writing performance after low-temperature storage.

In this regard, the water-based ink composition for a writing instrument of each of Comparative Examples B1 and B2 was not favorable in writing performance after low-temperature storage.

Comparative Example B3 exhibiting a viscosity of 78 mPa·s and Comparative Example B4 exhibiting a viscosity of 7200 mPa·s each exhibited favorable writing performance after low-temperature storage, but writing feeling before low-temperature storage and writing performance under a high load were adversely affected.

## Claims

1. A water-based ink composition for a writing instrument, the ink composition having an aqueous phase, and an oil phase dispersed in the state of an oil-in-water drop-type emulsion in the aqueous phase, wherein
at least one of the oil phase and the aqueous phase comprises a colorant,
the oil phase contains an oxygen remover and
a content of the oxygen remover is 3% by mass or more based on a mass of the oil phase, and
a content of the oxygen remover in the aqueous phase is 1.5% by mass or less based on a mass of the aqueous phase.

2. The water-based ink composition for a writing instrument according to Claim 1, wherein the oxygen remover in the oil phase is a water-insoluble oxygen remover.

3. The water-based ink composition for a writing instrument according to Claim 2, wherein the water-insoluble oxygen remover is at least one selected from the group consisting of tocopherol, terpene aldehyde, and any derivative thereof.

4. A writing instrument comprising an ink storage portion in which the water-based ink composition for a writing instrument according to Claim 1 or 2 is packed.

5. The writing instrument according to Claim 4, wherein the writing instrument is a ballpoint pen.

6. A water-based ink composition for a writing instrument, the ink composition having an aqueous phase, and an oil phase dispersed in the state of an oil-in-water drop-type emulsion in the aqueous phase, wherein
at least one of the oil phase and the aqueous phase comprises a colorant, and
the oil phase contains a primary alcohol or fatty acid having the following general formula (a) or (b) and having branched chains and 8 or more carbon atoms: 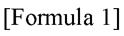 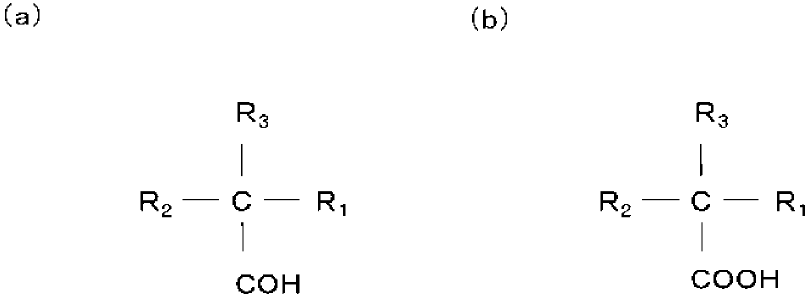
wherein R₁ and R₂ are each a linear or branched alkyl group, R₃ is hydrogen or a linear or branched alkyl group, and the number of carbon atoms in R₁, R₂ and R₃ in total is 6 or more.

7. The water-based ink composition for a writing instrument according to Claim 6, wherein the number of carbon atoms in the alcohol or fatty acid in the oil phase is 22 or less.

8. The water-based ink composition for a writing instrument according to Claim 6 or 7, wherein at least two of the branched chains of the alcohol or fatty acid in the oil phase are each an alkyl group having 4 or more carbon atoms.

9. The water-based ink composition for a writing instrument according to Claim 6 or 7, wherein a viscosity of the oil phase, measured under conditions of a temperature of 25°C and a shear rate of 38 s⁻¹, is 100 to 5000 mPa·s.

10. A writing instrument comprising an ink storage portion having the water-based ink composition for a writing instrument according to any one of Claim 6 or 7.

11. The writing instrument according to Claim 10, wherein the writing instrument is a ballpoint pen.
